# EUROPEAN PATENT APPLICATION

(11) **EP 1 731 901 A2**
(43) Date of publication of application: **13.12.2006**
(21) Application number: 06011637.3
(22) Date of filing: 06.06.2006
(51) Int. Cl.: G01N 27/406

(54) **Oxygen sensor**

(30) Priority: 06.06.2005 JP 2005165955
(71) Applicant: HITACHI, LTD., Chiyoda-ku Tokyo 100-8280 (JP)
(72) Inventor: Ichiyanagi, Futoshi, Isesaki-shi Gunma 372-0023 (JP); Uchikawa, Akira, Isesaki-shi Gunma 372-0023 (JP); Tsukada, Masao, Isesaki-shi Gunma 372-0023 (JP)
(74) Representative: Schaeberle, Steffen

(57) **Abstract**

An oxygen sensor includes a generally cylindrical casing (1a). A detecting section (3) is disposed at an axially one end side of the casing so as to detect a concentration of oxygen. Lead wires (4) are electrically connected with the detecting section and outwardly extend through an axially other end side of the casing. A seal member (5) is disposed inside an end section located at the axially other end side of the casing. The lead wires pierce the seal member. An insertion section is located at the axially one end side of the casing so that the detecting section projects over the insertion section. The insertion section is inserted into a through-hole formed in a wall of an exhaust pipe (2), so as to install the oxygen sensor to the exhaust pipe in a condition where the detecting section projects into the exhaust pipe. A ratio of a length of an outer projecting section of the oxygen sensor to a cross-sectional area of the insertion section inserted into the through-hole is set at a value not lower than a value at which a temperature in the seal member reaches a heat resistant temperature limit of the seal member.

## Description

### BACKGROUND OF THE INVENTION

This invention relates to improvements in an oxygen sensor.

Hitherto, various types of oxygen sensors have been proposed and put into practical use. One of such oxygen sensors is disclosed in Japanese Patent Provisional Publication No. 9-178694. This oxygen sensor includes a generally cylindrical casing provided at its axially one end side with a detecting section and at its axially other end side with a seal rubber for ensuring an airtight seal within the casing. The seal rubber is provided to block an opening located at the other end side of the casing. Lead wires (covered wires) pierce the seal rubber and are electrically connected to the detecting section.

In case that the oxygen sensor of this type is used to detect a concentration of oxygen in an exhaust pipe of an internal combustion engine, the seal rubber tends to be deteriorated by heat as the seal rubber is located nearer to the exhaust pipe which is high in temperature. Therefore, in a conventional technique, a material higher in heat resistance (or less in the heat deterioration) is used for the seal rubber. Additionally, the oxygen sensor is configured to extend so as to keep the seal rubber as far as possible from the heat source.

### SUMMARY OF THE INVENTION

However, in case that the oxygen sensor is configured to needlessly extend, there arises a drawback that the oxygen sensor interferes with other component parts.

Additionally, as a result of the inventors' various studies about the shape of the oxygen sensor, it has been revealed that the temperature in the seal rubber is largely effected by the cross-sectional area of an insertion section of the oxygen sensor inserted into a through-hole opened in the exhaust pipe as well as a length of the oxygen sensor.

In view of the above problems, it is an object of the present invention is to provide an oxygen sensor which can effectively overcome drawbacks encountered in conventional oxygen sensors.

Another object of the present invention is to provide an oxygen sensor having a suitable configuration which can suppress the temperature in a seal rubber or member to a level not higher than a heat resistant temperature limit of the seal rubber, the seal rubber tending to thermally deteriorate upon time lapse under a temperature not lower than the heat resistant temperature limit.

An aspect of the present invention resides in an oxygen sensor includes a generally cylindrical casing. A detecting section is disposed at an axially one end side of the casing so as to detect a concentration of oxygen. Lead wires are electrically connected with the detecting section and outwardly extend through an axially other end side of the casing. A seal member is disposed inside an end section located at the axially other end side of the casing. The lead wires pierce the seal member. An insertion section is located at the axially one end side of the casing so that the detecting section projects over the insertion section. The insertion section is inserted into a through-hole formed in a wall of an exhaust pipe, so as to install the oxygen sensor to the exhaust pipe in a condition where the detecting section projects into the exhaust pipe. A ratio of a length of an outer projecting section of the oxygen sensor to a cross-sectional area of the insertion section inserted into the through-hole is set at a value not lower than a value at which a temperature in the seal member reaches a heat resistant temperature limit of the seal member.

Another aspect of the present invention resides in an oxygen sensor includes a generally cylindrical casing. A detecting section is disposed at an axially one end side of the casing so as to detect a concentration of oxygen. A seal rubber is coaxially disposed at an axially other end side of the casing. Lead wires are electrically connected with the detecting section and outwardly extend through the seal rubber. A cover is disposed at the axially other end side of the casing so as to cover the seal rubber. An insertion section is coaxially located at the axially one end side of the casing, and securely inserted into a through-hole formed in a wall of an exhaust pipe so that the detecting section projects over the insertion section and extends into the exhaust pipe. A ratio of a length of an outer projecting section of the oxygen sensor to a cross-sectional area of the insertion section is set at a value not lower than a value at which a temperature of the seal rubber reaches a heat resistant temperature limit of the seal rubber. The length of the outer projecting section is an axial distance from the wall of the exhaust pipe to tip end of the cover. The cross-sectional area of the insertion section is a cross-sectional area on a plane perpendicular to axis of the oxygen sensor. The seal rubber tends to thermally deteriorate upon time lapse under a temperature not lower than the heat resistant temperature limit.

The other objects and features of this invention will become understood from the following description with reference to the accompanying drawings.

### BRIEF DESCRIPTION OF THE DRAWINGS

In the drawings, like reference numerals designate like parts and elements throughout all figures in which:
Fig. 1 is a side view, partly in cross-section, of an embodiment of an oxygen sensor according to the present invention and an exhaust pipe to which the oxygen sensor is installed;
Fig. 2 is a graph showing a correlation between a cross-sectional area of an insertion section and a temperature in a seal member of the oxygen sensor of Fig. 1; and
Fig. 3 is a graph showing a correlation between the cross-sectional area of the insertion section and a length of the outer projecting section of the oxygen sensor of Fig. 1.

### DETAILED DESCRIPTION OF THE INVENTION

Referring now to attached drawings, an embodiment of an oxygen sensor according to the present invention is illustrated in combination with an exhaust pipe of an automotive vehicle on which an internal combustion engine is mounted, in which the oxygen sensor is installed to the exhaust pipe to detect an air-fuel ratio of exhaust gas.

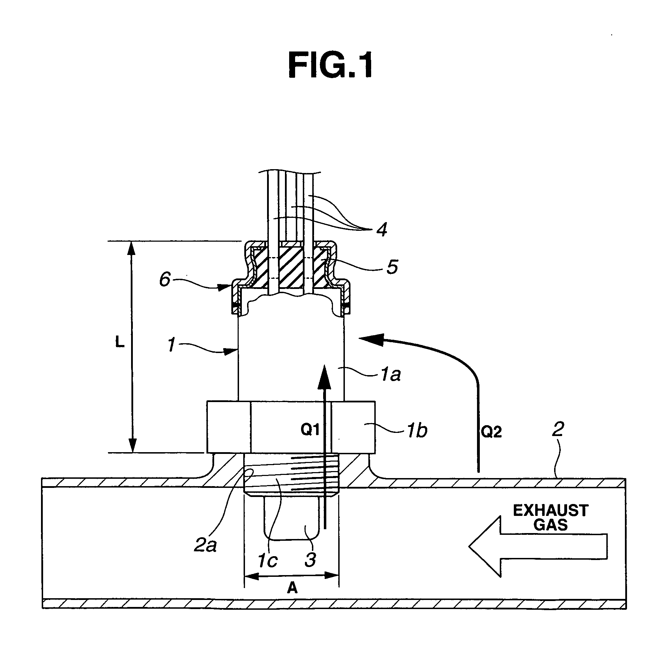

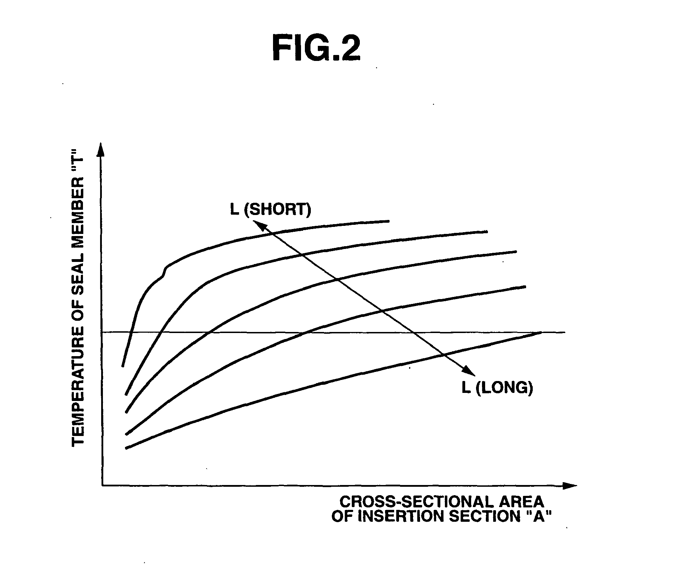

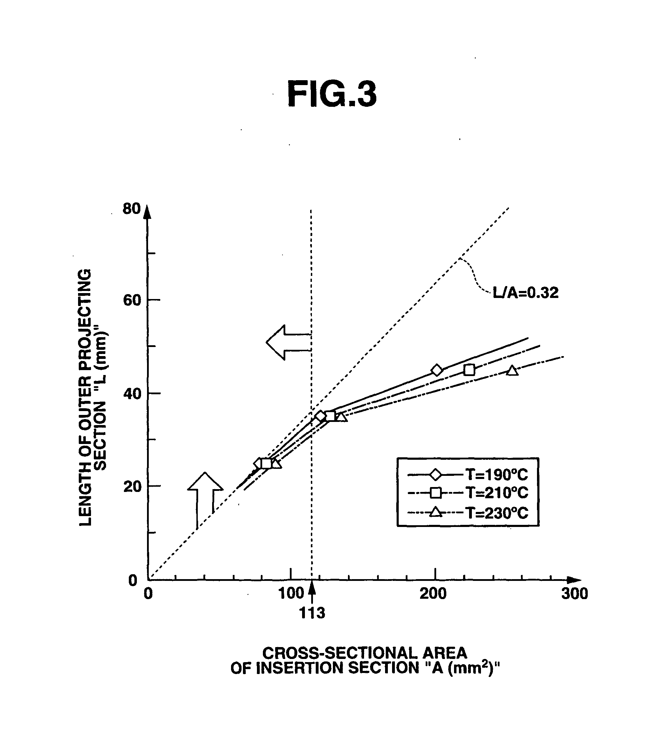

Fig. 1 is a side view, partly in cross-section, of an embodiment of an oxygen sensor according to the present invention and an exhaust pipe to which the oxygen sensor is installed. Fig. 2 is a graph showing a correlation between a cross-sectional area of an insertion section and a temperature in a seal member of the oxygen sensor of Fig. 1. Fig. 3 is a graph showing a correlation between the cross-sectional area of the insertion section and a length of the outer projecting section of the oxygen sensor of Fig. 1.

As shown in Fig. 1, exhaust pipe 2 is formed at its side wall with female-threaded hole 2a as a through-hole with which male threaded section 1c of oxygen sensor 1 is threadedly engaged so that oxygen sensor 1 is attached to exhaust pipe 2. In this embodiment, male-threaded section 1c is inserted into female-threaded hole 2a as the through-hole so as to serve as an insertion section.

Oxygen sensor 1 includes generally cylindrical casing 1a formed of, for example, a metal material. Casing 1a is provided at axially one end side with detecting section 3 for detecting a concentration of oxygen. Detecting section 3 is disposed to exhaust pipe 2 to project and extend from an inner wall of exhaust pipe 2 into an exhaust gas passage of exhaust pipe 2. Therefore, detecting section 3 is exposed to an exhaust gas flowing in the exhaust gas passage, so that oxygen sensor 1 outputs an electric signal corresponding to a concentration of the oxygen. The output electric signal is fed into a control device such as an ECU so that the control device carries out a control for an internal combustion engine based on a detection result or the electric signal.

Oxygen sensor 1 is also provided with grip section 1b in such a manner that grip section 1b radially projects from the outer wall of casing 1. Grip section 1b is shaped generally hexagonal as seen in the axial direction of the oxygen sensor. Oxygen sensor 1 is rotationally moved upon gripping and turning grip section 1b by a tool such as a wrench, so that male threaded section 1c is threadedly engaged with female threaded hole 2a. Grip section 1b does not necessarily shaped hexagonal and may be formed into another shape, for example, including two faces parallel with each other.

A seal rubber is housed inside casing 1 located at the axially other end side (i.e, a side opposite to the above-mentioned one end side at which detecting section 3 is disposed). The seal rubber as seal member 5 is made, for example, of a fluoro rubber, silicone rubber, or the like which is high in heat resistance. A plurality of (for example, four) lead wires 4 piece seal member 5 and are electrically connected to detecting section 3. Seal member 5 is provided for ensuring an air tight seal and a liquid tight seal inside oxygen sensor 1 at a section where lead wires 4 pierce seal member 5 (i.e, a section at which the seal member 5 is contacted with outer surfaces of respective lead wires 4) and another section where seal member 5 is contacted with an inner wall of casing 1a.

Furthermore, the oxygen sensor 1 is provided with cap 6 which is installed to cover an end surface of an exposed side of seal member 5 for the purpose of protection or the like for seal member 5, casing 1a and lead wires 4. In this embodiment, cap 6 is made of a metal material (for example, austenite stainless steel; SUS 303, SUS 304 or the like according to Japanese Industry Standard (JIS)) which is high in corrosion resistance and high in thermal conductivity, and fixed to casing 1a under wholly peripheral welding.

As a result of various studies made by the inventors on oxygen sensor 1 having the above configuration and an installation structure for oxygen sensor 1, it has been revealed that the temperature in seal member 5 becomes higher as the cross-sectional area of the insertion section (of oxygen sensor 1) inserted into the through-hole or female-threaded hole 2a formed at the side wall of exhaust pipe 2 becomes larger, the cross-sectional area being on a plane perpendicular to an axis of oxygen sensor 1 and being an average value (indicated by A in Fig. 1) of the cross-sectional areas of male threaded section 1c in this embodiment. However, it has been revealed that a degree of contribution of cross-sectional area A of the insertion section to a temperature rising in seal member 5 changes in accordance with the length (L in Fig. 1) of outer projecting section of oxygen sensor 1. The outer projecting section of oxygen sensor 1 is an axially extending section (of the oxygen sensor) between the lower surface (contacting with the wall of the exhaust pipe) of grip section 1b and the tip end of cap 6.

That is to say, as shown in Fig. 2, it has been revealed that in case that length L of the outer projecting section is long, the rate of change of temperature T (i.e., an inclination of each curve in Fig. 2) in seal member 5 is generally constant and relatively low in accordance with cross-sectional area A of the insertion section. However, in case that length L of the outer projecting section is short, as cross-sectional area A of the insertion section is smaller (or in case that cross-sectional area A of the insertion section is relatively small), the rate of change of temperature T in seal member 5 becomes higher (i.e., a sensitivity of temperature T to cross-sectional area A becomes higher as cross-sectional area A of the insertion section is smaller) in accordance with cross-sectional area A of the insertion section. This results from the fact that a heat quantity transmitted from exhaust pipe 2 to seal member 5 consists of a heat quantity Q1 which is produced under a heat conduction through a main body or the like of oxygen sensor 1 and a heat quantity Q2 produced under a heat radiation from exhaust pipe 2. Consequently, it is assumed that the ratio of heat quantity Q2 to the transmitted total heat quantity becomes smaller as length L of the outer projecting section becomes longer. In this embodiment, length L of the outer projecting section is defined as the length from a seating surface of grip section 1b (i.e., a contacting surface between grip section 1b and exhaust pipe 2) to an outer end surface of cap 6.

Based on this result, the inventors have carried out experimental tests about various combinations between cross-sectional area A of the insertion section and length L of the outer projecting section. As a result of the tests and in-depth considerations, the inventors have found that if a ratio of length L of the outer projecting section to cross-sectional area A of the insertion section is set not lower than a certain value, the temperature in seal member 5 can be suppressed to a value not higher than a heat resistant temperature limit for the seal member.

That is to say, as shown in Fig. 3, it has been revealed that the correlation between cross-sectional area A of the insertion section and length L of the outer projecting section can approximate to a generally linear function, dividing the graph into a first region in which cross-sectional area A of the insertion section is small and a second region in which cross-sectional area A of the insertion section is large. Additionally, the ratio of length L of the outer projecting section to cross-sectional area A of the insertion section becomes larger as temperature T in seal member 5 is lower. Furthermore, in case that the ratio of length L of the outer projecting section to cross-sectional area A of the insertion section is set at a value not lower than a certain value (specifically, L/A≧0.32), temperature T in seal member 5 can be suppressed to a value not higher than the heat resistant temperature limit (at least not lower than 190°C in this embodiment) which is obtained by taking account of a thermal deterioration upon time lapse of seal (rubber) member 5 made of fluoro rubber, silicone rubber or the like. Additionally, from Fig. 3, it will be understood that in case that L/A≧0.32 is set, temperature T in seal member 5 can be suppressed to the value not higher than the heat resistant temperature limit regardless of the value of cross-sectional area A of the insertion section especially in case that cross-sectional area A of the insertion section is not greater than 113 mm² (corresponding to a screw of M12 in JIS), L/A=0.32 becomes a setting near to the heat resistant temperature limit for seal member 5. Therefore, the setting of L/A≧0.32 is effective particularly for oxygen sensor 1 which is smaller in size, for example, that for motorcycles or the like. In Fig. 3, plotting of experimental data are made at respective temperatures of seal member 5 in an experiment in which the temperature of exhaust gas in exhaust pipe 2 is 500°C.

In this first embodiment, length A of the outer projecting section of oxygen sensor 1 can be set at such a value that the temperature in seal member 5 does not exceed the heat resistant temperature limit, in accordance with cross-sectional area A of the insertion section. Therefore, oxygen sensor 1 can be formed into a more suitable shape without unnecessarily increasing length L of the outer projecting section of oxygen sensor 1. Additionally, the ratio between the length (or length L of the outer projecting section) and the diameter (or cross-sectional area A of the insertion section) of oxygen sensor 1 can be adjusted within a range exceeding the heat resistant temperature limit thereby improving a degree of freedom in shape of oxygen sensor 1. This can provide a merit that a degree of freedom in layout of component parts increases.

Additionally, in this embodiment, the ratio L/A of length L of the outer projecting section to cross-sectional area A of the insertion section of oxygen sensor 1 is set not lower than 0.32, so that the temperature in seal member 5 can be further securely maintained at a value not higher than the heat resistant temperature limit of seal member 5.

Furthermore, in this embodiment, in case that cross-sectional area A of the insertion section is set at a value not larger than 113 mm² (and not smaller than a value for the smallest size oxygen sensor which is practically producible), the temperature in seal member 5 can be further securely maintained at a level not higher than the heat resistant temperature limit.

This invention can be embodied as the following other embodiments which can make operation and effects similar to those in the above-mentioned embodiment.
(1) In the above-mentioned first embodiment, the illustration has been made in the case that the fluoro rubber, silicon rubber or the like are used for the seal member. Also in case that other materials are used for the seal member, the oxygen sensor can be configured in such a manner that the temperature in the seal member can be set at the value not greater than the heat resistant temperature limit under a technique that the ratio L/A of length L of the outer projecting section to cross-sectional area A of the insertion section is set at a value not lower than a certain value (which varies in accordance with kinds of materials and conditions), similarly to in the above-mentioned embodiment.
(2) In the above-mentioned embodiment, the illustration has been made in the case that the temperature of the exhaust gas in the exhaust pipe is 500°C. Also in case that the temperature of the exhaust gas is at a value higher or lower than 500°C, the oxygen sensor can be configured in such a manner that the temperature in the seal member can be set at the value not higher than the heat resistant temperature limit under a technique that the ratio L/A of length L of the outer projecting section to cross-sectional area A of the insertion section is set at a value not lower than a certain value, similarly to in the above-mentioned embodiment.

Hereinafter, discussion will be made on technical ideas comprehended from the above embodiments.
(a) An oxygen sensor includes a generally cylindrical casing. A detecting section is disposed at an axially one end side of the casing so as to detect a concentration of oxygen. Lead wires are electrically connected with the detecting section and outwardly extend through an axially other end side of the casing. A seal member is disposed inside an end section located at the axially other end side of the casing. The lead wires pierce the seal member. An insertion section is located at the axially one end side of the casing so that the detecting section projects over the insertion section. The insertion section is inserted into a through-hole formed in a wall of an exhaust pipe, so as to install the oxygen sensor to the exhaust pipe in a condition where the detecting section projects into the exhaust pipe. A ratio of a length of an outer projecting section of the oxygen sensor to a cross-sectional area of the insertion section inserted into the through-hole is set at a value not lower than a value at which a temperature in the seal member reaches a heat resistant temperature limit of the seal member.
   With the above idea, the above-mentioned length of the outer projecting section of the oxygen sensor can be set at a value at which the temperature in the seal member does not exceed the heat resistant temperature limit, in accordance with the cross-sectional area of the insertion section. Therefore, the oxygen sensor can be formed into a more suitable shape without unnecessarily increasing the length of the outer projecting section. Additionally, the ratio between the length and the diameter (or the cross-sectional area of the insertion section) of the oxygen sensor can be adjusted thereby improving a degree of freedom in shape of the oxygen sensor. This provides a merit that a degree of freedom in layout of component parts is improved.
(b) An oxygen sensor as described in the idea (a), in which the ratio of the length of the outer projecting section of the casing to the cross-sectional area of the insertion section is set at a value not lower than 0.32.
   With the above idea, the ratio of the above-mentioned length of the outer projecting section to the cross-sectional area of the above-mentioned insertion section is set not lower than 0.32, so that the temperature in the seal member can be further securely maintained at a value not greater than the heat resistant temperature limit.
(c) An oxygen sensor as described in the idea (b), in which the cross-sectional area of the insertion section is set at a value not larger than 113 mm².
   With the above idea, in case that the cross-sectional area of the above-mentioned insertion section is set at a value not larger than 113 mm² (and not smaller than a value for the smallest size oxygen sensor which is substantively producible), the temperature in the seal member can be further securely maintained at a level not higher than the heat resistant temperature limit.
(d) An oxygen sensor as described in ideas (a) to (c), in which it is preferable to use the fluoro rubber or the silicon rubber for the material of the seal member.
   With the above idea, the rubber high in the heat resistance is used for the seal member, so that the oxygen sensor can be further small-sized.
(e) An oxygen sensor as described in ideas (a) to (c) or (d), in which it is preferable to dispose the cap made of metal to cover the end surface of the exposed side of the seal member.
   With the above idea, a heat radiation from the seal member is improved, so that the temperature in the seal member can be lowered, and therefore the oxygen sensor can be small-sized.

As discussed above, discussion has been made on the preferable embodiments for carrying out the present invention. The invention is not limited to the embodiments described above. Modifications and variations of the embodiment described above will occur to those skilled in the art, in light of the above teachings.

The entire contents of Japanese Patent Applications No. 2005-165955, filed June 6, 2005 is incorporated by reference.

## Claims

1. An oxygen sensor comprising:
a generally cylindrical casing;
a detecting section disposed at an axially one end side of said casing so as to detect a concentration of oxygen;
lead wires electrically connected with said detecting section and outwardly extend through an axially other end side of said casing;
a seal member disposed inside an end section located at the axially other end side of said casing, said lead wires piercing said seal member; and
an insertion section located at the axially one end side of said casing so that the detecting section projects over the insertion section, said insertion section being inserted into a through-hole formed in a wall of an exhaust pipe, so as to install said oxygen sensor to the exhaust pipe in a condition where said detecting section projects into the exhaust pipe;
wherein a ratio of a length of an outer projecting section of said oxygen sensor to a cross-sectional area of said insertion section inserted into the through-hole is set at a value not lower than a value at which a temperature in said seal member reaches a heat resistant temperature limit of said seal member.

2. An oxygen sensor as claimed in Claim 1, wherein said insertion section is coaxial with said casing.

3. An oxygen sensor as claimed in Claim 1, wherein the ratio of the length of the outer projecting section of said casing to the cross-sectional area of said insertion section is set at a value not lower than 0.32.

4. An oxygen sensor as claimed in Claim 2, wherein the cross-sectional area of the insertion section is set at a value not larger than 113 mm².

5. An oxygen sensor as claimed in Claim 1, wherein the length of the outer projecting section of said oxygen sensor is an axial distance from the wall of the exhaust pipe to tip end of the end section located at the other end side of said casing; and the cross-sectional area of said insertion section is on a plane perpendicular to axis of said oxygen sensor.

6. An oxygen sensor as claimed in Claim 1, wherein the seal member is made of a heat resistant rubber selected from the group consisting of fluoro rubber and silicone rubber.

7. An oxygen sensor as claimed in Claim 1, wherein the seal member tends to thermally deteriorate upon time lapse under a temperature not lower than the heat resistant temperature limit.

8. An oxygen sensor comprising:
a generally cylindrical casing;
a detecting section disposed at an axially one end side of said casing so as to detect a concentration of oxygen;
a seal rubber coaxially disposed at an axially other end side of said casing;
lead wires electrically connected with said detecting section and outwardly extend through the seal rubber;
a cover disposed at the axially other end side of said casing so as to cover said seal rubber;
an insertion section coaxially located at the axially one end side of said casing, and securely inserted into a through-hole formed in a wall of an exhaust pipe so that the detecting section projects over the insertion section and extends into the exhaust pipe;
wherein a ratio of a length of an outer projecting section of said oxygen sensor to a cross-sectional area of said insertion section is set at a value not lower than a value at which a temperature of said seal rubber reaches a heat resistant temperature limit of said seal rubber, the length of the outer projecting section being an axial distance from the wall of the exhaust pipe to tip end of said cover, the cross-sectional area of said insertion section is a cross-sectional area on a plane perpendicular to axis of said oxygen sensor, the seal rubber tending to thermally deteriorate upon time lapse under a temperature not lower than the heat resistant temperature limit.
